# EUROPÄISCHE PATENTSCHRIFT

(11) **EP 1 159 338 B1**
(45) Veröffentlichungstag und Bekanntmachung des Hinweises auf die Patenterteilung: **03.09.2003**
(21) Anmeldenummer: 00900453.2
(22) Anmeldetag: 20.01.2000
(51) Int. Cl.: C08J 9/00, C08K 3/08, C08J 9/16

(54) **TEILCHENFÖRMIGE, EXPANDIERBARE STYROLPOLYMERISATE UND VERFAHREN ZU IHRER HERSTELLUNG**
PARTICLE-SHAPED, EXPANDABLE STYRENE POLYMERS AND METHOD FOR THE PRODUCTION THEREOF
POLYMERES DE STYRENE PARTICULAIRES, EXPANSIBLES, ET LEUR PROCEDE DE PRODUCTION

(30) Priorität: 25.01.1999 AT 9999
(43) Veröffentlichungstag der Anmeldung: 05.12.2001
(73) Patentinhaber: Sunpor Kunststoff GmbH, 3100 St. Pölten (AT)
(72) Erfinder: EBERSTALLER, Roman, A-3200 Obergrafendorf (AT); ARDUINI-SCHUSTER, Mariacarla, D-97273 Kürnach (DE); KUHN, Joachim, D-97072 Würzburg (DE)
(74) Vertreter: Wildhack, Helmut, Dr. Dipl.-Ing.
(86) Internationale Anmeldenummer: AT0000013
(87) Internationale Veröffentlichungsnummer: WO00043442

(56) Entgegenhaltungen:
- DE-A- 4 406 613
- DE-A- 19 545 097
- JP-A- 7 330 997
- PATENT ABSTRACTS OF JAPAN vol. 005, no. 053 (M-063), 14. April 1981 (1981-04-14) & JP 56 010432 A (ACHILLES CORP), 2. Februar 1981 (1981-02-02)

## Beschreibung

Die Erfindung bezieht sich auf teilchenförmige, expandierbare Styrolpolymerisate (EPS), die zu Hartschaumstoffen mit feiner Zellstruktur und geringer Dichte verarbeitbar sind und hiefür zumindest ein Treibmittel enthalten und zur Verbesserung ihrer Wärmedämmeigenschaften zumindest Aluminium in Teilchenform aufweisen. Weiters bezieht sich die Erfindung auf ein Verfahren zur Herstellung solcher expandierbarer Styrolpolymerisatteilchen.

Styrolpolymerisatteilchen (EPS) der eingangs geschilderten Art sind bekannt (EP 620.246 A). Hiebei handelt es sich um treibmittelhaltige Polystyrolpartikel, die sich durch Erwärmen mit Wasserdampf (Vorschäumprozess) unter Vervielfachung ihres Volumens expandieren lassen und anschließend durch Verschweißung zu beliebig geformten Formteilen, insbesondere Blöcken, verarbeitet werden können. Bevorzugte Anwendungsgebiete solcher Polystyrolpartikelschäume sind Wärmedämmstoffe, z.B. für Gebäudefassaden, Kühlhäuser oder Verpackungsmaterialien, wobei die Wärmedämmwirkung des Schaumstoffes von entscheidender Bedeutung für seine Qualität ist. Es ist daher bereits vorgeschlagen worden, die Wärmeleitfähigkeit von Polystyrolhartschaumstoffen dadurch zu reduzieren, dass dem Styrolpolymerisat Stoffe zugesetzt werden, welche die Durchlässigkeit von Infrarotstrahlung durch den Schaumstoff vermindern. Hiefür ist es aus der eingangs erwähnten Literaturstelle bekannt, athermane Materialien, das sind Infrarotstrahlen absorbierende Materialien, einzusetzen, wobei Metalloxide, z.B. Al₂O₃, Nichtmetalloxide, Aluminiumpulver oder Ruß bzw. Graphit, vorgeschlagen werden. Insbesondere sollen diese Zusätze für eine Oberflächenbeschichtung der Polystyrolpartikel Verwendung finden. Diese Vorgangsweise hat jedoch den Nachteil, dass ein undefinierbarer Anteil dieser Beschichtung bei der Verarbeitung verlorengeht, was eine ebenso undefinierte Reduktion der Wärmedämmung und darüber hinaus eine Verunreinigung der Abwässer mit sich bringt. Weiters führt eine solche Oberflächenbeschichtung der Polystyrolpartikel aufgrund der Trennwirkung zu einer wesentlichen Verschlechterung der Verschweißeigenschaften der Polystyrolteilchen, was wiederum zu einer erhöhten Wärmeleitfähigkeit und zu einer Verminderung der mechanischen Festigkeit des Hartschaumstoffteiles führt.

Aus der eingangs erwähnten Literaturstelle ist es zwar auch bekannt, die athermanen Materialien in das noch nicht aufgeschäumte Granulat zur Bildung des Polystyrolhartschaumes einzubetten, insbesondere zusammen mit einem Treibmittel. Die erzielten Ergebnisse waren jedoch bisher nicht befriedigend, denn es traten Schwierigkeiten bei der Einbettung der athermanen Materialien auf. Üblicherweise wird nämlich EPS mittels Suspensionspolymerisation hergestellt. Dabei wird Styrol unter Rühren in Wasser suspendiert, wodurch sich Tröpfchen bilden, die mittels Reaktionsstartern polymerisiert und im Laufe des Verfahrens mit Treibmittel imprägniert werden. Die athermanen Materialien können jedoch hiebei nicht einfach zugegeben werden, da diese Stoffe unlöslich in Styroi sind und deshalb von den Tröpfchen nicht aufgenommen werden. Aber auch die Einbringung der athermanen Stoffe in EPS durch Mischung dieser Stoffe mit Polystyrolschmelze mittels eines Extrusionsprozesses hat nicht befriedigt. Dabei wird Polystyrol gemeinsam mit den Additiven und Treibmittel auf Temperaturen Ober dem Glaspunkt von Polystyrol erhitzt, durch Friktion vermischt, gekühlt und durch eine Lochdüse gedrückt Sofort nach dem Verlassen der Düse muss der extrudierte Strang mittels eines Kaitwasserbades gekühlt werden, um ein Aufschäumen zu verhindern. Der abgekühlte Strang wird dann In kurze Einzelpartikel granuliert. Hiebel tritt Jedoch das Problem auf, dass die vorgeschlagenen athermanen Stoffe einen stark keimbildenden Effekt haben, sodass ein Aufschäumen des Materiales nach dem Verlassen der Düse nicht verhindert werden kann. Dieser keimbildende Effekt hängt von der Konzentration, der Größe, der Form und der Zusammensetzung der Keimbildner ab, sowie von der Schmelzetemperatur, dem Trelbmittelgehalt und der Rezeptur des verwendeten Polystyrols.

Diese Eigenschaften der athermanen Stoffe machen es notwendig, eine Unterwassergranulierung unter Druck durchzuführen, um ein Aufschäumen der Granulatteilchen zu verhindern. Dies bedingt einen wesentlich größeren Aufwand als die übliche Stranggranulierung und es ist mit dieser Art der Granulierung eine Erzielung von Granulat-Teilchengrößen unter 1 mm nicht möglich. Die Beimengung von Ruß bzw. Graphit erhöht zudem die Brennbarkeit des Partikelschaumes, was eine Erhöhung des Zusatzes an Flammschutzsystemen notwendig macht, um für den Baubereich zulässige Brandeigenschaften erreichen zu können. Weiters ist zu beobachten, dass es durch die Eigenschaft der athermane Materialien, insbesondere Ruß oder Graphit, die Infrarotstrahlung zu absorbieren, bei der Lagerung der hergestellten Dämmstoffplatten im-Freien bei Sonneneinstrahlung zu einer starken Erwärmung und damit zu einer Verformung dieser Platten kommen kann.

Die beschriebene Vorgangsweise (EPS) unterscheidet sich grundsätzlich von der Produktion von Schaumstoffplatten (XPS), wobei der Schaumbildungsprozeß direkt an der Düse des Extruders stattfindet (DE 195 45 097 A1). Bei dieser Art des Verfahrens werden der zu extrudierenden Kunststoffmasse gezielt anorganische Stoffe zugesetzt, um ein Aufschäumen der Kunststoffmasse nach Verlassen der Düse zu bewirken. Bei dieser Verfahrensführung stellt die Beimengung athermaner Stoffe, welche genau diese Aufschäumung bewirken, somit kein Problem dar.

Die Erfindung setzt sich zur Aufgabe, teilchenförmige, expandierbare Styrolpolymerisate (EPS) der eingangs beschriebenen Art so zu verbessern, dass die geschilderten Schwierigkeiten vermieden sind, insbesondere dass es bei der Einbettung der wärmedämmenden Aluminiumteilchen nicht zu Schwierigkeiten kommt und dass die Wärmedämmeigenschaften und die Sonnenstrahlenempflindlichkeit der hergestellten Styrolpolymerisate verbessert werden. Die Erfindung löst diese Aufgabe dadurch, dass die Styrolpolymerisatteilchen die Aluminiumteilchen in homogener Verteilung als Infrarotstrahlen reflektierendes Material eingearbeitet enthalten, wobei der Hauptanteil der Aluminiumteilchen als Plättchen vorliegt, deren größte Abmessung jeweils zwischen 1 und 15 µm liegt. Überraschenderweise zeigt es sich, daß die Beimengung von Aluminiumplättchen der erwähnten Größe bei homogener Verteilung im Styrolpolymerisat nicht nur die feine Zellstruktur der expandierten Styrolpolymerisatteilchen, welche durch geeignete organische Keimbildner, z.B. Paraffine, Chlorparaffine, Fischer-Tropsch-Wachse sowie Ester und Amide von Fettsäuren, erzielt wind, in keiner Weise beeinträchtigt, sondern dass sich auch Wesentlich verbesserte Wärmedämmeigenschaften der Styrolpolymerisatteilchen bzw. der daraus hergestellten Hartschaumstoffe ergeben. Die Aluminiumteilchen wirken somit nicht störend bei der Keimbildung. Vor allem aber bewirkt die Plättchenform der Aluminiumteilchen, dass die Aluminiumteilchen im Vergleich zur Kugelform eine größere Oberfläche aufweisen und dadurch stark reflektierend auf die einfallende Infrarotstrahlung einwirken. Die günstigsten Ergebnisse ergeben sich hiebei. wenn der Größtdurchmesser der Aluminiumplättchen zumindest das 10-fache der mittleren Plättchenstärke beträgt. Auf die starke Reflexionswirkung der eingebetteten Aluminiumplättchen ist es zurückzuführen, dass der beschriebene Nachteil bekannter, aus EPS-Styrolpolymerisatteilchen hergestellter Dämmstoffplatten, sich bei Sonneneinstrahlung stark zu erwärmen und damit zu verformen, vermieden ist, da infolge der Reflexion der Infrarotstrahlung keine nennenswerte Absorption derselben stattfindet.

Für die Herstellung eines dielektrischen Materials für einen Radarreflektor Ist es bekannt (JP-A-56010432 bzw. Derwent Abstract AN 1981-22167D), Polystyrol mit einem Treibmittel zu imprägnieren und Aluminiumplättchen mit einer Fläche von 0,4 bis 1 mm² zuzugeben. Die so hergestellte Mischung wird extrudiert und die erhaltenen Stränge in Pellets zerschnitten. Auf die Reflexion von Infrarotstrahlen zwecks Verbesserung der Wärmedämmeigenschaften des Styrolpolymerisats gibt diese Literaturstelle keinen Hinweis.

Die homogene Zellstruktur in endungsgemäßer Weise erhaltener expandierter Schaumstoffperlen weist eine durchschnittliche Zellgröße von etwa 0,1 mm auf, die Zellgröße schwankt zwischen etwa 0,05 und 0,2 mm.

Im Zusammenhang mit der vorliegenden Erfindung sind unter "Styrolpolymerisate" Polystyrol und Mischpolymerisate des Styrols mit anderen Verbindungen, z.B.α-Methylstyrol, Acrylnitril, Maleinsäureanhydrid, Butadien, Divinylbenzol, zu verstehen.

Als Treibmittel kommen unter Normalbedingungen gasförmige oder flüssige Kohlenwasserstoffe in Frage, die einen Siedepunkt unterhalb des Erweichungspunktes des Polymerisates haben. Typische Vertreter dieser Verbindungen sind Propan, Butan, Pentan und Hexan.

Weiters können alle üblichen Hilfsstoffe, wie Nuklelerungsmittel, Flammschutzmittel, UV-Stabilisatoren, Weichmacher, Pigmente, Antioxidantien und Säurefänger eingesetzt werden.

Ein weiterer Vorteil der Erfindung besteht darin, dass sie es ermöglicht, den Anteil an die Infrarotstrahlung beeinflussenden Mitteln bei gleichem oder sogar verbessertem Effekt geringer zu halten, als dies bisher möglich war. So ist es im Rahmen der Erfindung möglich, daß die Styrolpolymerisattellchen weniger als 6 Gew-%, bezogen auf das Polymere, an Aluminlumteilchen enthalten, vorzugsweise 0.05 bis 4 Gew-%, Insbesondere 0,3 bis 1 Gew-%. Dadurch wird nicht nur eine Erspamis an dem einzubringenden Material erzielt, sondern es wirken die beschriebenen Aluminiumplättchen in der geringen Konzentration nicht störend bei der Keimbildung, zeigen aber eine ausreichende Infrarot-Reflexion.

Die Aluminiumplättchen, welche unregelmäßig begrenzt, sehr glatt, plan und dünn sind, sind, haben Abmessungen, welche nicht In jeder Richtung gleich sind. Bevorzugt ist es im Rahmen der Erfindung, wenn zumindest 95% der Aluminiumteilchen eine größte Abmessung von höchstens 15 µm haben.

Wenngleich sich durch die Verwendung der Aluminiumplättchen in der beschriebenen Art bereits eine wesentliche Verbesserung der Wärmedämmeigenschaften ergibt, so bedeutet dies nicht, dass nicht noch weitere Verbesserungen durch die Verwendung zusätzlicher Materialien erzielbar sind. So ergeben sich erfindungsgemäß weitere Vorteile, wenn zusätzlich zu den plättchenförmigen Aluminiumteilchen noch weitere Infrarotstrahlen dämmende bzw. die Wärmedämmeigenschaften erhöhende Materialien In Teilchenform in den Styrolpolymerisattellchen homogen verteilt eingearbeitet enthalten sind. Als ein besonders geeignetes solches Material eignet sich im Rahmen der Erfindung Antimontrisulfid (Sb₂S₃). Hiebei ergibt sich nämlich ein synergistischer Effekt zwischen den Aluminiumplättchen und den Antimontrisulfidteilchen, da erstere reflektierend auf die Infrarotstrahlung einwirken, letztere hingegen vorwiegend absorbierend. Dies bringt Vorteile, wenn eine Absorption der Infrarotstrahlung gewünscht bzw. tolerabel ist. Zur Vergrößerung der Wirksamkeit Ist es hiebel zweckmäßig, die Antimontrisulfidteilchen größer zu bemessen als die Aluminiumteilchen, wobei die Antimontrisulfidteilchen insbesondere eine Korngröße von 10 bis 60 µm aufweisen.

Es ist im Rahmen der Erfindung auch möglich, die Wärmedämmeigenschaften durch zusätzliche Beigabe von Ruß und/oder Graphit in Form feiner Teilchen zu steigern, wobei jedoch der Anteil des Rußes bzw. Graphits weniger als 2 Gew-%, bezogen auf das Polymere, beträgt. Der geringe Ruß- bzw. Graphitanteil bedingt nur eine geringe Steigerung der Brennbarkeit der Styrolpolymerisatpartikel, was durch Zugabe üblicher Flammschutzsysteme kompensiert werden kann, etwa von Hexabromcyclododecan und eines Synergists (Dicumyl bzw. Dicumylperoxid).

Erfindungsgemäße Styrolpolymerisatpartikel lassen sich auf verschiedene Weise kostengünstig herstellen. Eine Variante des erfindungsgemäßen Verfahrens besteht darin; dass in einem Reaktor Styrol und/oder dessen Verbindungen mit zumindest einem Treibmittel polymerisiert wird und im Laufe der Polymerisation höchstens 6 Gew.-%, vorzugsweise höchstens 5 Gew.-%, insbesondere höchstens 4 Gew.-%, Aluminiumteilchen mit einem Hauptanteil in Plättchenform in Form eines Masterbatches, dessen Trägermaterial Polystyrol ist, beigegeben werden.

Eine andere Variante des erfindungsgemäßen Verfahrens besteht darin, dass in einem Extruder Styrolpolymerisate aufgeschmolzen und mit zumindest einem Treibmittel und Aluminiumteilchen mit einem Hauptanteil in Plättchenform vermischt und gemeinsam extrudiert werden, wobei der eingesetzte Aluminiumteilchenanteil höchstens 6 Gew.-%, vorzugsweise höchstens 5 Gew.-%, insbesondere höchstens 4 Gew.-% beträgt, wonach das Extrudat sofort abgekühlt und zur Teilchenform zerkleinert, insbesondere granuliert, wird. Diese sofortige Abkühlung vermeidet eine Aufschäumung der Teilchen. Hiebei kann die Extrusion als Druckunterwassergranulation durchgeführt werden, wobei es für diese im Rahmen der Erfindung tolerabel ist, den eingesetzten Aluminiumteilchenanteil höher als bei normaler Extrusion zu bemessen, also für Druckunterwassergranulation mit höchstens 6 Gew-%, bezogen auf das Polymer.

In erfindungsgemäßer Weise hergestellte, teilchenförmige, expandierbare Styrolpolymerisate, welche Aluminiumteilchen in homogener Verteilung enthalten, können in an sich üblicher Weise auf eine Dichte von höchstens 30 g/l aufgeschäumt werden. Die so hergestellten Polystyrolschaumstoffkörper sind also sehr leicht, dennoch sehr fest. Ihre Wärmedämmeigenschaften sind im Vergleich zu bekannten Produkten wesentlich besser.

Erfindungsgemäß hergestellte Polystyrolpartikelschaumstoffe können für Wärmedämmzwecke aller Art in vorteilhafter Weise Verwendung finden, insbesondere für die Wärmedämmung von Gebäuden und Gebäudeteilen, z.B. Fassaden, Kühlhäusern usw., weiters für die thermische Isolierung von Maschinen und Geräten aller Art oder als Verpackungsmaterialien für solche Gegenstände, welche gegen Wärmeeinwirkung geschützt werden sollen.

Die folgenden Beispiele erläutern die Erfindung näher. Die erwähnten Prozentangaben beziehen sich auf das Gewicht des Polymers.

### Beispiel 1:

Polystyrol mit einem Molekulargewicht von etwa 220.000 wurde in einem Extruder gemeinsam mit 1,3 % Hexabromcyclododecan und 0,2 % Dicumyl als Flammschutzmittel und 0,3% Aluminiumplättchen mit einer durchschnittlichen Größtabmessung von 3 µm aufgeschmolzen, mit 6,3 % Pentan versetzt, auf etwa 120°C abgekühlt und durch eine Lochdüse gepresst. Die entstehenden Stränge mit einem Durchmesser von ca. 0,8 mm wurden in einem Kaltwasserbad unter die Erstarrungstemperatur gekühlt und anschließend mittels Stranggranulator granuliert.

Das entstandene Granulat wurde mit für diesen Zweck üblichen Coatingmaterialien (Glycerin- oder Zinkstearate) beschichtet, um ein Verkleben während des Aufschäumvorganges zu verhindern und anschließend in einem diskontinuierlichen Vorschäumer auf eine Dichte von 15 g/l vorgeschäumt. Die Zellstruktur der so erhaltenen Schaumstoffperlen war homogen und wies eine durchschnittliche Zellgröße von etwa 0,1 mm auf. Nach einer Zwischenlagerung von 24 Stunden wurden Blöcke mit den Maßen 600x600x190 mm hergestellt und mittels Heißdraht zu Platten mit einer Dicke von 50 mm geschnitten. Die beiden mittleren Platten wurden nach Lagerung bis zur Gewichtskonstanz für die Messung der Wärmeleitfähigkeit herangezogen.

So hergestellte Platten wiesen eine Wärmeleitzahl von 35,8 mW/m.K auf.

### Beispiel 2:

Es wurde wie in Beispiel 1 vorgegangen, jedoch betrug die durchschnittliche Größtabmessung der eingesetzten Aluminiumplättchen 5 µm.

Die so hergestellten Platten wiesen eine Wärmeleitzahl von 34,2 auf.

### Beispiel 3:

Es wurde wie in Beispiel 1 vorgegangen, jedoch Aluminiumplättchen mit einer durchschnittlichen maximalen Größtabmessung von 15 µm verwendet

Die so hergestellten Platten wiesen eine Wärmeleitzahl von 36,5 mW/m.K auf.

### Beispiel 4:

Es wurde wie in Beispiel 1 vorgegangen, jedoch die Konzentration des Aluminiumplättchenanteiles mit 0,8 % gewählt.

Die so hergestellten Platten wiesen eine Wärmeleitzahl von 34,3 mW/m.K auf.

### Beispiel 5:

Es wurde wie in Beispiel 2 vorgegangen, jedoch die Konzentration des eingesetzten Aluminiumplättchenanteiles mit 0,8 % gewählt.

So hergestellte Platten wiesen eine Wärmeleitzahl von 32,6 mW/m.K auf.

### Beispiel 6:

Es wurde wie in Beispiel 3 vorgegangen, jedoch die Konzentration des eingesetzten Aluminiumanteiles mit 0,8 % bemessen.

So hergestellte Platten wiesen eine Wärmeleitzahl von 35,0 mW/m.K auf.

### Beispiel 7:

Es wurde wie in Beispiel 1 vorgegangen, jedoch zusätzlich zu den Aluminiumplättchen noch 0,5 % Antimontrisulfidteilchen mit einer durchschnittlichen Korngröße von etwa 35 µm eingesetzt.

So hergestellte Platten wiesen eine Wärmeleitzahl von 33,8 mW/m.K auf.

### Beispiel 8:

Es wurde wie in Beispiel 1 vorgegangen, jedoch zusätzlich zu den Aluminiumplättchen noch 0,5 % feine Rußteilchen eingesetzt.

So hergestellte Platten wiesen eine Wärmeleitzahl von 34,0 mW/m.K auf.

### Beispiel 9:

Es wurde wie in Beispiel 1 vorgegangen, jedoch zusätzlich zu den Aluminiumplättchen noch 0,5 % feine Graphitteilchen eingesetzt.

So hergestellte Platten wiesen eine Wärmeleitzahl von 34,2 mW/m.K auf

### Beispiel 10:

Zu Vergleichszwecken wurde wie in Beispiel 1 vorgegangen, jedoch ohne Zusatz von Aluminiumplättchen.

So hergestellte Platten wiesen eine Wärmeleitzahl von 37,3 mW/m.K auf.

Aus den Ergebnissen zeigt sich, dass die Wärmeleitzahl sich mit der Teilchengröße der eingesetzten Aluminiumplättchen ändert und die besten Werte etwa bei einer durchschnittlichen Teilchenabmessung von 5 µm ergibt. Ebenso ändert sich die Wärmeleitzahl mit der Konzentration der eingesetzten Aluminiumteilchen, wobei ein Anteil von 0,8 % an Aluminiumplättchen (bei sonst gleicher Verfahrensführung) bessere Werte erbrachte als ein Anteil von bloß 0,3 %. Auch letzterer Anteil erbrachte jedoch wesentlich bessere Werte als eine Plattenherstellung ohne Aluminiumteilchen.

Die bei den Versuchen produzierten Materialien zeigten aufgrund der geringen Konzentration an Aluminium keinerlei Verschlechterung der Brandeigenschaften und keinerlei Aufschäumung während der Produktion des Rohstoffgranulates.

Auch eine Reduktion der Verschweißungsgüte oder der mechanischen Eigenschaften konnte nicht beobachtet werden.

Weiters zeigte sich, dass der Einsatz von Aluminiumplättchen, welche im Gegensatz zu Kohlenstoff als Infrarotreflektor wirken, keine erhöhte Erwärmung durch Bestrahlung mit Sonnenlicht bewirkt.

Das Material, welches mit Aluminiumteilchen der Plättchengröße 5 µm und einer Konzentration von 0,8 % hergestellt wurde, weist eine Isolierwirkung auf, die der Wärmeleitfähigkeitsgruppe 035 entspricht.

## Patentansprüche

1. Teilchenförmige, expandierbare Styrolpolymerisate (EPS), die zu Hartschaumstoffen mit feiner Zellstruktur und geringer Dichte verarbeitbar sind, und hiefür zumindest ein Treibmittel enthalten und zur Verbesserung ihrer Wärmedämmelgenschaften zumindest Aluminium in Teilchenform als Infrarotstrahlen dämmendes Material aufweisen, **dadurch gekennzeichnet, dass** die Styrolpolymerisatteilchen die Aluminlumteilchen In homogener Verteilung als Infrarotstrahlen reflektierendes Material eingearbeitet enthalten, wobei der Hauptanteil der Aluminiumteilchen als Plättchen vorliegt, deren größte Abmessung jeweils zwischen 1 und 15 µm liegt.

2. Styrolpolymerisate nach Anspruch 1, **dadurch gekennzeichnet, dass** der Größtdurchmesser der Aluminiumplättchen zumindest das 10-fache der mittleren Plättchenstärke beträgt.

3. Styrolpolymerisate nach Anspruch 1 oder 2, **dadurch gekennzeichnet, dass** sie weniger als 6 Gew.-%, bezogen auf das Polymere, Aluminiumteilchen enthalten.

4. Styrolpolymerisate nach Anspruch 3, **dadurch gekennzeichnet, dass** sie 0,05 bis 4 Gew.-% Aluminiumteilchen enthalten.

5. Styrolpolymerisate nach Anspruch 3, **dadurch gekennzeichnet, dass** sie 0,3 bis 1 Gew.-% Aluminiumteilchen enthalten.

6. Styrolpolymerisate nach einem der Ansprüche 1 bis 5, **dadurch gekennzeichnet, dass** zumindest 95% der Aluminiumteilchen eine größte Abmessung von höchstens 15µm haben.

7. Styrolpolymerisate nach einem der Ansprüche 1 bis 6, **dadurch gekennzeichnet, dass** zusätzlich zu den Aluminiumteilchen noch weitere, Infrarotstrahlen dämmende bzw. die Wärmedämmeigenschaften erhöhende Materialien In Teilchenform in den Styrolpolymerisatteilchen homogen verteilt eingearbeitet enthalten sind.

8. Styrolpolymerisate nach Anspruch 7, **dadurch gekennzeichnet, dass** Antimontrisulfidteilchen in den Styrolpolymerisatteilchen enthalten sind.

9. Styrolpolymerisate nach Anspruch 8, **dadurch gekennzeichnet, dass** die Antimontrisulfidteilchen größer sind als die Aluminiumteilchen.

10. Styrolpolymerisate nach Anspruch 9, **dadurch gekennzeichnet, dass** die Antimontrisulfidteilchen eine Korngröße von 10 bis 60 um aufweisen.

11. Styrolpolymerisate nach Anspruch 7, **dadurch gekennzeichnet, dass** Ruß und/oder Graphit in Form feiner Teilchen in den Styrolpolymerisattelichen enthalten sind, wobei der Anteil des Rußes und Graphits weniger als 2 Gew.-%, bezogen auf das Polymere, beträgt

12. Styrolpolymerisate nach einem derAnsprüche 1 bis 11, **dadurch gekennzeichnet, dass** sie zu Polystryrolschaumstoffoartikeln mit homogener Zellstruktur und einer Zellgröße zwischen 0,05 und 0,2 mm verarbeitbar sind.

13. Verfahren zur Herstellung tellchenförmiger, expandierbarer Styrolpolymerisate nach Anspruch 1, **dadurch gekennzeichnet, dass** in einem Reaktor Styrol und/oder dessen Verbindungen mit zumindest einem Treibmittel polymerisiert wird und im Laufe der Polymerisation höchstens 6 Gew.-% Aluminiumteilchen mit einem Hauptanteil in Plättchenform, In Form eines Masterbatches, dessen Trägermaterial Polystyrol ist, beigegeben werden.

14. Verfahren zur Herstellung teilchenförmiger, expandierbarer Styrolpolymerisate nach Anspruch 1, **dadurch gekennzeichnet, dass** in einem Extruder Styrolpolymerisate aufgeschmolzen und mit zumindest einem Treibmittel und Aluminiumteilchen mit einem Hauptanteil In Plättchenform vermischt und gemeinsam extrudiert werden, wobei der eingesetzte Aluminiumteilchenanteil höchstens 6 Gew.-% beträgt, wonach das Extrudat sofort abgekühlt und zur Teilchenform zerkleinert wird.

15. Verfahren nach Anspruch 13 oder 14, **dadurch gekennzeichnet, dass** der Aluminiumteilchenanteil höchstens 5 Gew.-% beträgt.

16. Verfahren nach Anspruch 13 oder 14, **dadurch gekennzeichnet, dass** der Aluminiumteilchenanteil höchstens 4 Gew.-% beträgt.

17. Verfahren nach einem der Ansprüche 14 bis 16, **dadurch gekennzeichnet, dass** das Extrudat granuliert wird.

18. Verfahren nach einem der Ansprüche 14 bis 17, **dadurch gekennzeichnet, dass** die Extrusion als Druckunterwassergranulation durchgeführt wird.

19. Verfahren zur Herstellung von Polystryrolschaumstoffen, **dadurch gekennzeichnet, dass**, Aluminiumteilchen in homogener Verteilung enthaltende, expandierbare Styrolpolymerisatteilchen nach Anspruch 1 auf eine Dichte von höchstens 30g/l aufgeschäumt werden.

20. Polystyrolpartikelschaumstoffe aus EPS-Teilchen, **dadurch gekennzeichnet, dass** sie eine Dichte von höchstens 30g/l aufweisen und Aluminiumplättchen In homogener Verteilung beinhalten, deren Hauptanteil eine größte Abmessung zwischen 1 und 15 µm hat.

21. Polystyrolpartikelschaumstoffe nach Anspruch 20, **dadurch gekennzeichnet, dass** der Anteil an Aluminiumplättchen weniger als 6 Gew.-%, bezogen auf das Polymere, beträgt.

22. Polystyrolpartikelschaumstoffe nach Anspruch 21, **dadurch gekennzeichnet, dass** der Anteil an Aluminiumplättchen 0,05 bis 4 Gew.-%, beträgt.

23. Polystyrolpartikelschaumstoffe nach Anspruch 21, **dadurch gekennzeichnet, dass** der Anteil an Aluminiumplättchen 0,3 bis 1 Gew.-%, beträgt.

24. Polystyrolpartikelschaumstoffe, **dadurch gekennzeichnet, dass** sie Aluminiumteilchen und Antimontrisulfidteilchen In homogener Verteilung beinhalten

25. Verwendung von Polystyrolpartikelschaumstoffen nach einem der Ansprüche 20 bis 24 för Wärmedämmzwecke.

## Claims

1. Particle shaped, expandable styrene polymers (EPS) which may be processed into hard foam material of fine cellular structure and low density, and contain, to this end, at least one propellant and comprise at least aluminium in particulate form as an infrared isolating material in order to improve their thermal isolating properties, **characterised in that** the styrene polymer particles contain said aluminium particles in a homogeneous distribution as an infrared reflecting material, the main proportion of aluminium particles being present as platelets, the maximum dimension of each of which is between 1 and 15 µm.

2. Styrene polymers according to claim 1, **characterised in that** the maximum diameter of the aluminium platelets is at least the 10-fold of the average thickness of the platelets.

3. Styrene polymers according to claim 1 or 2, **characterised in that** they contain less than 6 % by weight of aluminium particles, in relation to the polymers.

4. Styrene polymers according to claim 3, **characterised in that** they contain 0.05 to 4% by weight of aluminium particles.

5. Styrene polymers according to claim 3, **characterised in that** they contain 0.3 to 1 % by weight of aluminium particles.

6. Styrene polymers according to any of claims 1 to 5, **characterised in that** at least 95% of the aluminium particles have a maximum dimension of 15µm in maximum.

7. Styrene polymers according to any of claims 1 to 6, **characterised in that** in addition to the aluminium particles, still further infrared rays isolating or thermal isolation enhancing materials are contained in particulate form distributed homogeneously within the styrene polymer particles.

8. Styrene polymers according to claim 7, **characterised in that** antimony trisulfide particles are contained within the styrene polymer particles.

9. Styrene polymers according to claim 8, **characterised in that** the antimony trisulfide particles are larger than the aluminium particles.

10. Styrene polymers according to claim 9, **characterised in that** the antimony trisulfide particles have a grain size of 10 to 60 µm.

11. Styrene polymers according to claim 7, **characterised in that** carbon black and/or graphite are contained in the form of fine particles within the styrene polymer particles, the proportion of carbon black and graphite amounting to less than 2 % by weight, in relation to the polymers.

12. Styrene polymers according to any of claims 1 to 11, **characterised in that** they are transformable into polystyrene foam particles of a homogeneous cellular structure and a cell dimension between 0.05 and 0.2 mm.

13. Method for the production of particulate, expandable styrene polymers according to claim 1, **characterised in that** styrene and/or a compound of it is polymerised in form of a master batch, the carrier material being polystyrene, together with at least one propellant within a reactor, and that 6 % by weight in maximum of aluminium particles having a main proportion in form of platelets are added during polymerisation.

14. Method for the production of particulate, expandable styrene polymers according to claim 1, **characterised in that** styrene polymers are molten in an extruder and are mixed with at least one propellant and aluminium particles, the main proportion of which being in form of platelets, and are extruded together, the proportion of aluminium particles used being 6 % by weight in maximum, after which the extruded product is cooled immediately and is comminuted into the form of particles.

15. Method according to claim 13 or 14, **characterised in that** the proportion of aluminium particles amounts to 5 % by weight in maximum.

16. Method according to claim 13 or 14, **characterised in that** the proportion of aluminium particles amounts to 4 % by weight in maximum.

17. Method according to any of claims 14 to 16, **characterised in that** the extruded product is granulated.

18. Method according to any of claims 14 to 16, **characterised in that** the extrusion is carried out as a pressurised underwater granulation.

19. Method for the production of polystyrene foam, **characterised in that** expandable polystyrene particles according to claim 1, containing a homogeneous distribution of aluminium particles are foamed to a density of 30 g/l in maximum.

20. Polystyrene particle foam of EPS particles, **characterised in that** they have a density of 30 g/l in maximum and contain a homogeneous distribution of aluminium platelets, the main proportion of which having a maximum dimension between 1 and 15µm.

21. Polystyrene particle foam according to claim 20, **characterised in that** the proportion of aluminium platelets amounts to less than 6 % by weight in relation to the polymer.

22. Polystyrene particle foam according to claim 21, **characterised in that** the proportion of aluminium platelets amounts to 0.05 to 4 % by weight.

23. Polystyrene particle foam according to claim 21, **characterised in that** the proportion of aluminium platelets amounts to 0.3 to 1 % by weight.

24. Polystyrene particle foam **characterised in that** it contains a homogeneous distribution of aluminium particles and antimony trisulfide particles.

25. Utilisation of a polystyrene particle foam according to any of claims 20 to 24 for the purpose of thermal insulation.

## Revendications

1. Polymères de styrène particulaires, expansibles (EPS) étant transformables en matériaux à mousse rigides ayant une structure cellulaire fine et une densité basse, qui - à ce fin - contiennent au moins un produit moussant et présentent au moins d'aluminium particulaire comme matériau isolant les rayons infrarouge pour améliorer ses qualités d'isolation thermique, **caractérisés en ce que** les particules du polymère de styrène contiennent les particules d'aluminium enfoncés et distribués de façon homogène comme matériau réfléchissant les rayons infrarouge, la part principale des particules d'aluminium étant présent comme des lamettes, dont la dimension plus grande respective est entre 1 et 15 µm.

2. Polymères de styrène selon la revendication 1, **caractérisés en ce que** le diamètre maximum des lamettes d'aluminium est au moins 10 fois autant que l'épaisseur moyenne des lamettes.

3. Polymères de styrène selon la revendication 1 ou 2, **caractérisés en ce qu'**ils contiennent moins que 6 % en poids de particules d'aluminium relativement au poids du polymère.

4. Polymères de styrène selon la revendication 3, **caractérisés en ce qu'**ils contiennent 0,05 à 4 % en poids de particules d'aluminium.

5. Polymères de styrène selon la revendication 3, **caractérisés en ce qu'**ils contiennent 0,3 à 1 % en poids de particules d'aluminium.

6. Polymères de styrène selon une quelconque des revendications 1 à 5, **caractérisés en ce qu'**au moins 95% des particule d'aluminium ont une dimension maximum de 15µm en maximum.

7. Polymères de styrène selon une quelconque des revendications 1 à 6, **caractérisés en ce qu'**additionnellement aux particules d'aluminium des autres matériaux encore sont contenus en forme particulaire, qui isolent les rayons infrarouge et améliorent les qualités d'isolation thermique, enfoncés à être distribués de façon homogène dans les particules de polymère de styrène.

8. Polymères de styrène selon la revendication 7, **caractérisés en ce que** des particules de trisulfure d'antimoine sont contenus dans les particules de polymère de styrène.

9. Polymères de styrène selon la revendication 8, **caractérisés en ce que** les particules de trisulfure d'antimoine sont plus grands que les particules d'aluminium.

10. Polymères de styrène selon la revendication 9, **caractérisés en ce que** des particules de trisulfure d'antimoine ont une grosseur de grain de 10 à 60 µm.

11. Polymères de styrène selon la revendication 7, **caractérisés en ce que** des particules fins de noir de carbone et/ou de graphite sont contenus dans les particules de polymère de styrène, la part du noir de carbone et du graphite étant moins que 2 % en poids relativement au polymère.

12. Polymères de styrène selon une quelconque des revendications 1 à 11, **caractérisés en ce qu'**ils peuvent transformés aux particules de mousse de polymère de styrène ayant une structure cellulaire homogène et une grandeur des cellules entre 0,05 et 0,2 mm.

13. Procédé de production des polymères de styrène particulaires, expansibles selon la revendication 1, **caractérisé en ce que** l'on polymérise d'abord de styrène et/ou des composés de ceci avec au moins un produit moussant dans un réacteur et on ajoute au cours de la polymérisation 6 % en poids en maximum des particules d'aluminium ayant une part principale en forme des lamettes, comme charge maître dont le matériau de base est le polymère de styrène.

14. Procédé de production des polymères de styrène particulaires, expansibles selon la revendication 1 , **caractérisé en ce que** l'on fond de polymère de styrène dans extrudeuse et on le mélange et extrude en commun avec au moins un produit moussant et des particules d'aluminium ayant une part principale en forme de lamettes, la part de particules d'aluminium utilisée étant 6 % en poids en maximum, après quoi on refroidi immédiatement le produit d'extrusion et le réduit en forme de particules.

15. Procédé selon la revendication 13 ou 14, **caractérisé en ce que** la part des particules d'aluminium est 5 % en poids en maximum.

16. Procédé selon la revendication 13 ou 14, **caractérisé en ce que** la part des particules d'aluminium est 4 % en poids en maximum.

17. Procédé selon une quelconque des revendications 14 à 16, **caractérisé en ce que** l'on granule le produit d'extrusion.

18. Procédé selon une quelconque des revendications 14 à 17, **caractérisé en ce que** l'extrusion est effectuée comme granulation en plongé dans l'eau sous pression.

19. Procédé de production d'un produit alvéolaire de polymères de styrène, **caractérisé en ce que** l'on mousse des particules de polymère de styrène expansibles et contenant une distribution homogène des particules d'aluminium selon la revendication 1 à une densité de 30 g/l en maximum.

20. Produit alvéolaire de polymères de styrène particulaire des particules d'EPS, **caractérisé en ce qu'**il a une densité de 30g/l en maximum et contient une distribution homogène des lamettes d'aluminium, dont la part principale a des dimensions maximum entre 1 et 15 µm.

21. Produit alvéolaire de polymères de styrène particulaire selon la revendication 20, **caractérisé en ce que** la part des lamettes d'aluminium est moins que 6 % en poids relativement au poids du polymère.

22. Produit alvéolaire de polymères de styrène particulaire selon la revendication 21, **caractérisé en ce que** la part des lamettes d'aluminium est 0,05 à 4 % en poids de particules d'aluminium.

23. Produit alvéolaire de polymères de styrène particulaire selon la revendication 21, **caractérisé en ce que** la part des lamettes d'aluminium est 0,3 à 1 % en poids de particules d'aluminium.

24. Produit alvéolaire de polymères de styrène particulaire, **caractérisé en ce qu'**il contient une distribution homogène des particules d'aluminium et des particules de trisulfure d'antimoine.

25. Utilisation des produits alvéolaires de polymères de styrène particulaires selon une quelconque des revendications 20 à 24 pour des buts d'isolation thermique.
